# EUROPÄISCHE PATENTANMELDUNG

(11) **EP 4 130 974 A1**
(43) Veröffentlichungstag der Anmeldung: **08.02.2023**
(21) Anmeldenummer: 21189659.2
(22) Anmeldetag: 04.08.2021
(51) Int. Cl.: G06F 3/14

(54) **ANZEIGEVORRICHTUNG FÜR EINEN INDUSTRIELLEN SENSOR**

(71) Anmelder: VEGA Grieshaber KG, 77709 Wolfach (DE)
(72) Erfinder: BURGERT, Florian, 77723 Gengenbach (DE)
(74) Vertreter: Maiwald GmbH

(57) **Zusammenfassung**

Die Erfindung betrifft eine Anzeigevorrichtung (100) für einen industriellen Sensor, aufweisend ein elektronisches Display, wobei das elektronische Display (112) eingerichtet ist, eine codierte Information darzustellen. Die codierte Information ist eine Information zum Abrufen von gerätebezogenen Informationen über den Sensor (100).

## Beschreibung

### Technisches Gebiet

Die Erfindung betrifft eine Anzeigevorrichtung für einen industriellen Sensor, ein industrielles Sensorsystem, ein Nutzergerät für einen Industrielles Sensorsystem, und eine Verwendung einer optischen Codierung auf einem elektronischen Display eines industriellen Sensors.

### Stand der Technik

An industriellen Sensoren ist häufig ein Typenschild angebracht, auf dem gerätespezifische Informationen aufgedruckt sind. Das Typenschild ist jedoch aufgrund der zur Verfügung stehenden Fläche oft klein bei rauen Umgebungsbedingungen nicht über den gesamten Produktlebenszyklus lesbar.

### Offenbarung der Erfindung

Eine Aufgabe der Erfindung könnte daher sein, einen verbesserten industriellen Sensor zur Verfügung zu stellen.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Die beschriebenen Ausführungsformen betreffen in ähnlicher Weise die Anzeigevorrichtung für einen industriellen Sensor, das industrielles Sensorsystem, das Nutzergerät für einen Industrielles Sensorsystem, und die Verwendung einer optischen Codierung auf einem elektronischen Display eines industriellen Sensors. Synergieeffekte können sich aus verschiedenen Kombinationen der Ausführungsformen ergeben, obwohl sie möglicherweise nicht im Detail beschrieben werden.

Ferner ist zu beachten, dass alle Ausführungsformen der vorliegenden Erfindung, die ein Verfahren betreffen, in der beschriebenen Reihenfolge der Schritte ausgeführt werden können, jedoch muss dies nicht die einzige und wesentliche Reihenfolge der Schritte des Verfahrens sein. Die hier vorgestellten Verfahren können mit einer anderen Reihenfolge der offenbarten Schritte ausgeführt werden, ohne von der jeweiligen Verfahrensausführungsform abzuweichen, sofern im Folgenden nicht ausdrücklich etwas anderes angegeben ist.

Gemäß einem ersten Aspekt wird eine Anzeigevorrichtung für einen industriellen Sensor bereitgestellt, der ein elektronisches Display aufweist, wobei das elektronische Display eingerichtet ist, eine codierte Information darzustellen, wobei die codierte Information eine Information zum Abrufen von gerätebezogenen Informationen über den Sensor ist. Das Display kann als "elnk" Display ausgeführt sein, so dass im stromlosen Zustand die angezeigte Information erhalten bleibt. Das Display kann auch von der Sensoreinheit abgesetzt sein, wobei die Verbindung leitungsgebunden oder über eine Funkschnittstelle erfolgen kann. Im Falle einer Funkübertragung ist das Display batteriebetrieben oder gewinnt die Energie aus einer Solarzelle oder einer anderen Form des Energie Harvesting.

Ein industrieller Sensor ist beispielsweise ein Sensor in der Prozessautomatisierung oder Anlagenautomatisierung. Solche Sensoren weisen nicht notwendigerweise aber häufig neben dem eigentlichen physikalischen oder chemischen Messaufnehmer eine Elektronik auf, wie zum Beispiel einen AD-Wandler, Signalaufbereitung eine Kommunikationseinheit und eine Einheit zur Stromversorgung, sei es mit oder ohne eigenen Energiespeicher. Es gibt weiterhin Sensoren oder an die Sensoren ankoppelbare Module, die ein elektronisches Display zur Darstellung z.B. von Messwerten oder Statusmeldungen wie Batteriestand, falls der Sensor eine eigene Batterie hat, Fehlermeldungen oder weitere Informationen, aufweisen. Die hier vorgestellte Anzeigevorrichtung ist für einen Sensor vorgesehen, der ein solches elektronisches Display aufweist. Das elektronische Display bildet zum Beispiel zusätzlich zu weiteren Anzeigen oder durch eine Bedienung am Sensor einen optischen Code ab, der z.B. dem des Typenschildes entspricht. Die Anzeige kann dabei das Typenschild ersetzen oder zusätzlich zum Typenschild den Code anzeigen.

Die codierte Information ist eine Information zum Abrufen von gerätebezogenen Informationen über den Sensor. "Über den Sensor" ist zu verstehen als gerätebezogene Informationen, die den Sensor betreffen, d.h. nicht im Sinne von "via/durch den Sensor".

Die gerätebezogenen Informationen sind gemäß dieser Ausführungsform somit nicht direkt in dem Code codiert, sondern können z.B. von einem Speicher von einem Nutzergerät, das den Code abscannt und dekodiert, abgerufen werden. Die Information zum Abrufen von gerätebezogenen Informationen kann somit beispielsweise eine Netzwerkadresse, eine Datenbankadresse, eine Speicheradresse, etc. enthalten.

Alternativ oder zusätzlich können auch gerätebezogenen Informationen in dem Code abgespeichert sein. Diese Informationen sind vorzugsweise Informationen, die sich über die Lebenszeit des Sensors nicht ändern, wie z.B. Seriennummer oder Angaben zur Stromversorgung, wie sie auch auf dem Typenschild vorhanden sind.

Gemäß einer Ausführungsform beinhaltet die codierte Information einen sensorspezifischen Link zu einer Datenbank.

Eine solche Datenbank ist beispielsweise eine zentrale Datenbank, in der Informationen mehrerer Sensoren gespeichert sind und die einfach verwaltet und aktualisiert werden kann. Die abgerufenen Informationen können daher beispielsweise eine Dokumentation des Lebenszyklus des Sensors beinhalten.

Der Link kann zur Identifikation beispielsweise eine ID und/oder eine Seriennummer aufweisen.

Gemäß einer Ausführungsform ist die codierte Information eine optische Codierung in Form eines QR-Codes, eines Strichcodes oder eines numerischen Codes.

Entsprechend kann der Code von einem QR-Code-Scanner, einem Barcode-Scanner oder einem OCR-Scanner gescannt und dekodiert werden.

Gemäß einer Ausführungsform sind die gerätebezogenen Informationen über den Sensor eine oder mehrere der folgenden Informationen: Bestellcode, Bestellhistorie, Betriebsanleitung, Prüfzeugnisse, Konformitätsbescheinigungen, Sicherheitshinweise, Backup der Geräteeinstellungen, Firmware, Serviceanleitung, Fehlercodemapping, Ersatzeillisten, Predictive maintenance Informationen, Empfehlungen zum SW Update, Empfehlungen zum Tausch der Prozessdichtung und Montageanleitung.

Gemäß einer Ausführungsform weist die Anzeigevorrichtung weiterhin einen Codegenerator zum Erstellen der optischen Codierung auf.

Damit kann der Sensor, bzw. die Anzeigevorrichtung im Sensor selbst den Code, z.B. QR Code generieren. Die zu codierenden Information können beispielsweise in einem internen Speicher des Sensors oder der Anzeigevorrichtung abgelegt sein. Damit wird die Flexibilität der Anzeige erhöht. Der Code kann aber auch bereits codiert z.B. als Grafikcode in dem Speicher abgelegt sein, ohne generiert werden zu müssen.

Gemäß einer Ausführungsform weist die Anzeigevorrichtung weiterhin eine Schnittstelle zum Empfangen einer codierten Information, von zu codierenden Informationen und/oder gerätebezogenen Informationen.

Das heißt, dass z.B. eine Grafik wie beispielsweise ein QR-Code mit der codierten Information von extern in einen Speicher im Sensor oder in der Anzeigevorrichtung geladen werden kann, oder die nicht-codierte Information, die dann mit dem Codegenerator codiert und in dem Display angezeigt werden kann. Die Schnittstelle kann eine Schnittstelle zum Sensor sein, der wiederum eine Kommunikationseinheit aufweisen kann, oder ein HMI (human-machine-interface; Mensch-Maschine-Schnittstelle) wie z.B. Tasten oder ein berührungsempfindliches Display. Die Schnittstelle kann weiterhin eine Nahfeld-Kommunikationsschnittstelle wie zum Beispiel eine NFC oder Bluetooth-Schnittstelle sein.

Dies kann beispielsweise bei Systemänderungen nützlich sein, so dass die Netzwerkadresse oder der Link geändert werden können, oder aktuelle, zusätzliche Geräteinformationen angezeigt werden können, die somit nicht erst über eine Datenbankverbindung abgerufen werden müssen. Die Aktualisierung über die Schnittstelle kann z.B. regelmäßig oder bei Bedarf erfolgen.

Des Weiteren kann die Anzeigevorrichtung dekodierte gerätebezogene Informationen empfangen. Bei dieser Option dient ein Nutzergerät als Kommunikationsschnittstelle mit Kamera. Das Nutzergerät liest über seine Kamera den Code ein, baut die Verbindung zu der Datenbank auf, empfängt die gerätebezogenen Informationen Daten und sendet diese an die Anzeigevorrichtung, die diese dann im Klartext anzeigen kann. Die Schnittstelle der Anzeigevorrichtung benötigt hierfür lediglich einen Empfänger für die Daten, also keinen energieintensiven Sender, und das Nutzergerät lediglich eine Kamera und eventuell ein einfaches Display, das z.B. zum Eingeben von Zugangsdaten für den Link genutzt werden kann. Die Darstellung der gerätebezogenen Informationen erfolgt am Sensor durch die Anzeigevorrichtung. Die empfangenen Daten könnten dort gespeichert werden und beispielsweise mit einem Empfangszeitstempel oder einer zeitlichen Gültigkeitsangabe versehen werden, so dass Daten der letzten Aktualisierung auch ohne ein Nutzergerät ständig sichtbar sind oder abgerufen werden können.

Gemäß einem weiteren Aspekt wird ein industrielles Sensorsystem bereitgestellt, das einen Sensor mit einer hierin beschriebenen Anzeigevorrichtung mit elektronischem Display aufweist, wobei das elektronische Display eingerichtet ist, eine codierte Information darzustellen. Das industrielle Sensorsystem weist weiterhin eine Datenbank auf, wobei die Datenbank gerätebezogene Informationen über den Sensor enthält, und wobei der Sensor mittels des elektronischen Displays durch Anzeige der codierten Information einen Zugriff auf die Datenbank bereitstellt, um einen Abruf der gerätebezogenen Informationen über den Sensor zu ermöglichen.

"Ermöglichen" bedeutet hierbei, dass die gerätebezogenen Informationen aus der Datenbank entweder automatisch abgerufen werden, oder dass eine weitere Aktion des Nutzers notwendig ist, wie z.B. eine Bestätigung oder eine Eingabe von Zugriffsdaten.

Hierzu enthält der Code einen Link, über den z.B. über eine Mobilfunkverbindung bzw. eine Internetverbindung die Verbindung zu der Datenbank aufgebaut werden kann. Der Link kann zur Identifikation beispielsweise eine ID oder eine Seriennummer aufweisen.

Das industrielle Sensorsystem kann weiterhin ein Nutzergerät aufweisen, das den Code scannt, den Link dekodiert und den Link zum Aufbau der Verbindung zu der Datenbank nutzt. Das Nutzergerät für den industrielles Sensorsystem, aufweisend eine Kamera, eingerichtet zum Scannen einer auf einer Anzeigevorrichtung eines Sensors nach einem der vorhergehenden Ansprüche dargestellten codierten Information. Das Nutzergerät kann einen Dekodierer zum Dekodieren des Links zu der Datenbank, die Informationen über den Sensor enthält, eine Kommunikationseinheit zum Aufbauen einer Verbindung zu der Datenbank, Senden des dekodierten Links und Empfangen der gerätebezogenen Informationen über den Sensor enthalten. Zudem kann es eine Benutzerschnittstelle aufweisen, die zum Eingeben von Berechtigungsinformationen eingerichtet ist, um geschützte gerätebezogene Informationen über den Sensor abzufragen. Ferner kann sie eine Bluetooth, NFC oder sonstige Drahtlosschnittstelle enthalten, so dass ein Nutzer die zweiter Chipkarte hierüberparametrieren kann.

Der Link kann außer der ID noch weitere Informationen aufweisen. Beispielsweise können unveränderliche Daten wie z.B. Baujahr, Typ, etc. in dem Link abgespeichert sein. Das Nutzergerät kann dann einen Parser aufweisen, der diese Daten aus dem Link extrahiert und bereits vor dem Verbinden bzw. unabhängig von der Verbindung zur Datenbank diese Informationen anzeigen. Der Parser könnte diese Informationen zumindest teilweise auch von diesem Link abschneiden, so dass der tatsächliche Link zum Aufbauen der Verbindung nur eine Information zum Identifizieren des Sensors aufweist.

Gemäß einer Ausführungsform enthält die Datenbank zumindest teilweise berechtigungsgeschützte Informationen.

Derartige Informationen sind beispielsweise personenbezogenen Informationen.

Gemäß einem weiteren Aspekt wird eine Verwendung einer optischen Codierung auf einem elektronischen Display eines industriellen Sensors zum Abrufen von gerätebezogenen Informationen über den Sensor bereitgestellt.

Gemäß einem weiteren Aspekt wird ein Verfahren zum Abrufen von gerätebezogenen Informationen über einen Sensor eines industriellen Sensors bereitgestellt, die folgende Schritte aufweist: Anzeigen, durch eine Anzeigevorrichtung des Sensors, einer codierten Information auf einem elektronischen Display des industriellen Sensors zum Abrufen der gerätebezogenen Informationen über den Sensor von einer Datenbank.

Das Verfahren wird an dieser Stelle nicht weiter erläutert, da das Verfahren mit der Konfiguration der Anzeigevorrichtung korrespondiert. Es wird auf die Beschreibung oben und der Figuren verwiesen. Dies gilt auch für die nachfolgenden Ausführungsformen.

Gemäß einer Ausführungsform enthält die codierte Information einen Link, insbesondere einen sensorspezifischen Link, zu der Datenbank und eine ID des Sensors.

Gemäß einer Ausführungsform beinhaltet das Abrufen der gerätebezogenen Informationen über den Sensor ein Scannen des optischen Codes und Dekodieren des optischen Codes und Erhalten eines Links zu einer Datenbank, Aufbauen einer Verbindung zu der Datenbank unter Verwendung des Links; und Empfangen der gerätebezogenen Informationen über den Sensor von der Datenbank über die Verbindung.

Das Aufbauen einer Verbindung zu einer Datenbank ist zu so zu verstehen, dass ein Zugriff, z.B. über ein Kommunikationsnetzwert und z.B. einen Server auf die Datenbank erfolgt. Die Datenbank kann alternativ auch auf dem Nutzergerät gespeichert sein.

Gemäß einer Ausführungsform empfängt die Anzeigevorrichtung die gerätebezogenen Informationen von der Datenbank, z.B. durch das Nutzergerät, und stellt die Informationen durch das elektronische Display dar.

Andere Variationen der offenbarten Ausführungsformen können vom Fachmann bei der Durchführung der beanspruchten Erfindung durch das Studium der Zeichnungen, der Offenbarung und der beigefügten Ansprüche verstanden und ausgeführt werden. In den Ansprüchen schließt das Wort "umfassend" andere Elemente oder Schritte nicht aus, und der unbestimmte Artikel "ein" oder "eine" schließt eine Vielzahl nicht aus. Ein einzelner Prozessor oder eine andere Einheit kann die Funktionen mehrerer Gegenstände oder Schritte erfüllen, die in den Ansprüchen aufgeführt sind. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann. Ein Computerprogramm kann auf einem geeigneten Medium wie einem optischen Speichermedium oder einem Halbleitermedium, das zusammen mit oder als Teil einer anderen Hardware geliefert wird, gespeichert / verteilt werden, kann aber auch in anderen Formen, beispielsweise über das Internet oder andere drahtgebundene oder drahtlose Telekommunikationssysteme verteilt sein. Bezugszeichen in den Ansprüchen sollten nicht so ausgelegt werden, dass sie den Umfang der Ansprüche begrenzen.

### Kurze Beschreibung der Figuren

Im Folgenden werden Ausführungsbeispiele der Erfindung anhand der schematischen Zeichnungen näher erläutert. Hierbei zeigt
Fig. 1 ein Blockdiagramm eines industriellen Sensors mit einer Anzeigevorrichtung,
Fig. 2 ein Verfahren zum Abrufen von gerätebezogenen Informationen über einen
industriellen Sensor.

Einander entsprechende Teile sind in allen Figuren mit den gleichen Bezugszeichen versehen.

### Ausführungsbeispiele

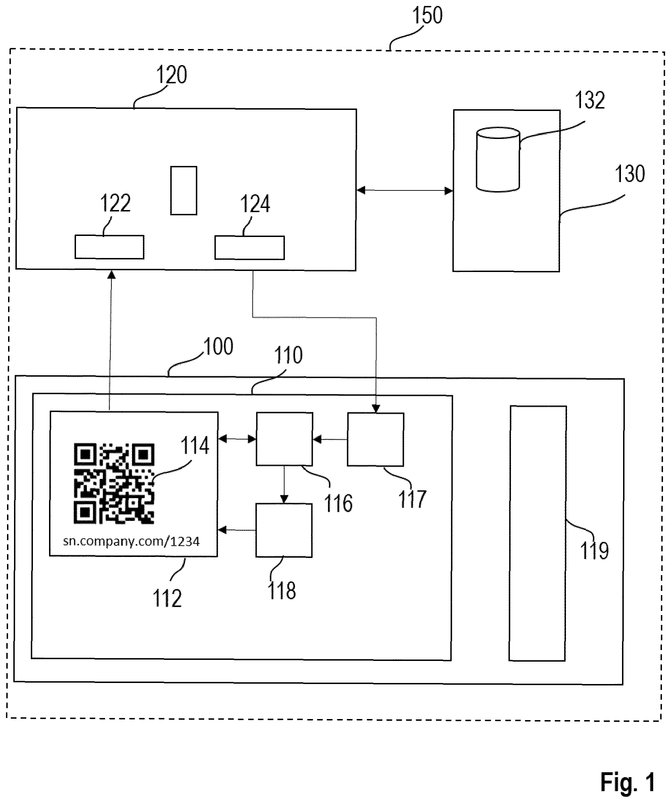

Fig. 1 zeigt ein Blockdiagramm eines Sensors 100 mit einer Anzeigevorrichtung 110 und Sensorelektronik 119. Die Anzeigevorrichtung 110 weist ein elektronisches Display 112 auf. Das elektronische Display zeigt einen QR-Code 114, der einen Link zu einer Datenbank 132 repräsentiert, in welcher gerätebezogene Informationen des Sensors 100 sowie anderen Sensoren abgespeichert sind. Der Link bzw. QR-Code 114 beinhaltet eine ID des Sensors 100, z.B. "1234", so dass der Eintrag in der Datenbank 132 referenziert werden kann. Der Code kann durch ein Nutzergerät 120 mit einer Kamera 122 und einer Kommunikationseinheit 124 gescannt werden, die die Verbindung zu der Datenbank 132 eines Servers 130 herstellt und die gerätebezogenen Informationen des Sensors 100 abruft. Gerätebezogene Informationen sind beispielsweise Bestellcode, Bestellhistorie, Betriebsanleitung, Prüfzeugnisse, Konformitätsbescheinigungen, Sicherheitshinweise, Backup der Geräteeinstellungen, etc.

Die Anzeigevorrichtung 110 kann weiterhin einen Codegenerator 116 und einen Speicher 118 aufweisen. Der Speicher 118 enthält z.B. den zu codierenden Link, den der Codegenerator 116 zu einem QR-Code codiert, oder er enthält die QR-Code Grafik 114 selbst. Durch den Codegenerator kann flexibel der Link oder die ID geändert werden, oder zusätzliche Informationen codiert werden, die z.B. auf dem Nutzergerät angezeigt werden können oder an die Datenbank 132 übermittelt werden können, wie zum Beispiel ein aktueller Status des Sensors 100. Es können auch weitere Informationen, wie z.B. Typ und Baujahr in den Link eingefügt werden. Die Zusatzinformationen können z.B. in den Link integriert werden und vom Nutzergerät 120 oder dem Server 130 bzw. der Datenbank 132 geparst werden. Das Nutzergerät 120 kann durch das Parsen Zusatzinformationen aus dem Link löschen.

Ferner kann die Anzeigevorrichtung 110 eine Kommunikationseinheit wie z.B. einen NFC-Empfänger, als Schnittstelle 117 aufweisen, der die abgerufenen gerätebezogenen Informationen von dem Nutzergerät 120 empfängt und in den Speicher 118 speichert, so dass diese Informationen durch das elektronische Display 112 angezeigt werden können, sowohl als Reaktion auf das Anzeigen bzw. Scannen des Codes 114 als auch danach, d.h. "offline".

Die Datenbank 130 und der Sensor 100 mit der Anzeigeanordnung 110 sind Teil eines Industrielles Sensorsystems 150, dem auch weitere Einheiten zugeordnet werden können, wie zum Beispiel der Server 130 und/oder das Nutzergerät 120.

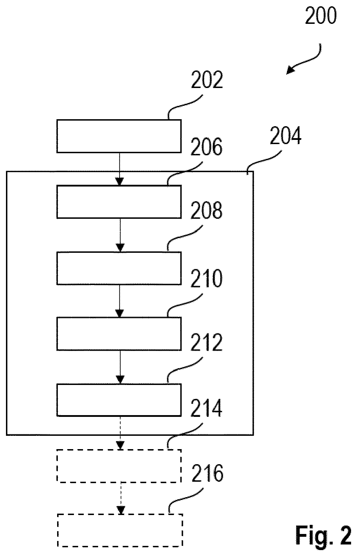

Fig. 2 zeigt ein Ablaufdiagramm eines Verfahrens 200 zum Abrufen von gerätebezogenen Informationen über einen Sensor 100 eines industriellen Sensors, aufweisend die Schritte: Anzeigen 202, durch eine Anzeigevorrichtung 110 des Sensors 100, einer codierten Information auf einem elektronischen Display 102 des industriellen Sensors und Abrufen 204 der gerätebezogenen Informationen über den Sensor 100 von einer Datenbank 132.

Der Schritt Abrufen 204 der gerätebezogenen Informationen über den Sensor 100 von der Datenbank 132 wird durch ein Nutzergerät 120 durchgeführt und weist weiterhin die folgenden Schritte auf: Scannen (206) des optischen Codes (114), Dekodieren (208) des optischen Codes (114) und erhalten eines Links zu einer Datenbank, Aufbauen des (210) einer Verbindung zu der Datenbank (132) unter Verwendung des Links, und Empfangen (212) der gerätebezogenen Informationen über den Sensor (100) von der Datenbank (132) über die Verbindung132. Es versteht sich, dass das Senden an die Datenbank 132 und Empfangen von der Datenbank 132 mittelbar durch eine Kommunikationseinrichtung geschieht. Die Datenbank 132 ist beispielsweise durch einen Server 130 erreichbar, der den Zugriff auf die Datenbank 132 durchführt und die Gegenstelle der Verbindung zu dem Nutzergerät 120 darstellt.

Das Verfahren 200 kann optional, und daher in Fig. 2 gestrichelt eingezeichnet, die Schritte Empfangen 214 gerätebezogener Informationen durch den Sensor 100 und Darstellen 216 der gerätebezogenen Informationen durch das elektronische Display 102 aufweisen. Das heißt, das Nutzergerät 120 sendet in diesem Fall die von der Datenbank 132 erhaltenen Daten zumindest teilweise an den Sensor 100, der sie dann darstellen kann.

Somit wird eine dauerhaft stabile Anzeige des Codes 114 bereitgestellt, die durch Flexibilität und Anpassbarkeit gekennzeichnet ist, und Möglichkeiten aufweist, die weit über ein gewöhnliches Typenschild an einem industriellen Sensor 100 hinausgehen.

## Patentansprüche

1. Anzeigevorrichtung (100) für einen industriellen Sensor, aufweisend
ein elektronisches Display, wobei das elektronische Display (112) eingerichtet ist, eine codierte Information darzustellen;
wobei die codierte Information eine Information zum Abrufen von gerätebezogenen Informationen über den Sensor (100) ist.

2. Anzeigevorrichtung (100) nach Anspruch 1, wobei die codierte Information einen sensorspezifischen Link zu einer Datenbank (132) beinhaltet.

3. Anzeigevorrichtung (100) nach Anspruch 1 oder 2, wobei die codierte Information eine optische Codierung (114) in Form eines QR-Codes (114), eines Strichcodes oder eines numerischen Codes ist.

4. Anzeigevorrichtung (100) nach einem der vorhergehenden Ansprüche, wobei die gerätebezogenen Informationen über den Sensor (100) eine oder mehrere der folgenden Informationen ist: Bestellcode, Bestellhistorie, Betriebsanleitung, Prüfzeugnisse, Konformitätsbescheinigungen, Sicherheitshinweise, Backup der Geräteeinstellungen.

5. Anzeigevorrichtung (100) nach einem der vorhergehenden Ansprüche, wobei die Anzeigevorrichtung (100) weiterhin einen Codegenerator zum Erstellen der optischen Codierung aufweist.

6. Anzeigevorrichtung (100) nach einem der vorhergehenden Ansprüche, weiterhin aufweisend eine Schnittstelle (117) zum Empfangen einer codierten Information, von zu codierenden Informationen und/oder gerätebezogenen Informationen.

7. Industrielles Sensorsystem (150), aufweisend
einen Sensor (100) mit einer Anzeigevorrichtung (100) nach einem der vorhergehenden Ansprüche mit einem elektronischen Display (112), wobei das elektronische Display (112) eingerichtet ist, eine codierte Information darzustellen; und
eine Datenbank (132), wobei die Datenbank (132) gerätebezogene Informationen über den Sensor (100) enthält;
wobei der Sensor (100) mittels des elektronischen Displays (112) durch Anzeige der codierten Information einen Zugriff auf die Datenbank (132) bereitstellt, um einen Abruf der gerätebezogenen Informationen über den Sensor (100) zu ermöglichen.

8. Industrielles Sensorsystem (150) nach Anspruch 7, wobei die Datenbank (132) zumindest teilweise berechtigungsgeschützte Informationen enthält.

9. Verwendung einer optischen Codierung auf einem elektronischen Display (112) eines industriellen Sensors (100) zum Abrufen von gerätebezogenen Informationen über den Sensor (100).

10. Verfahren (200) zum Abrufen von gerätebezogenen Informationen über einen Sensor (100) eines industriellen Sensors (100), aufweisend die Schritte:
Anzeigen (202), durch eine Anzeigevorrichtung (100) des Sensors, einer codierten Information auf einem elektronischen Display (112) des industriellen Sensors zum Abrufen der gerätebezogenen Informationen über den Sensor (100) von einer Datenbank (132).

11. Verfahren (200) nach Anspruch 10, wobei die codierte Information einen Link zu der Datenbank (132) und eine ID des Sensors (100) enthält.

12. Verfahren (200) nach Anspruch 10 oder 11, wobei das Abrufen der gerätebezogenen Informationen über den Sensor (100) die folgenden von einem Nutzergerät (120) durchgeführten Schritte aufweist:
Abrufen (204) der gerätebezogenen Informationen über den Sensor (100) von der Datenbank (132), wobei das Abrufen folgende Schritte aufweist:
Scannen (206) des optischen Codes (114);
Dekodieren (208) des optischen Codes (114) und Erhalten eines Links zu einer Datenbank;
Aufbauen (210) einer Verbindung zu der Datenbank (132) unter Verwendung des Links; und
Empfangen (212) der gerätebezogenen Informationen über den Sensor (100) von der Datenbank (132) über die Verbindung.

13. Verfahren (200) nach einem der Ansprüche 10 bis 12, weiterhin aufweisend die durch den Sensor (100) durchgeführten Schritte:
Empfangen (212) der gerätebezogenen Informationen über den Sensor (100) von der Datenbank.
Darstellen (214) gerätebezogener Informationen durch das elektronische Display (112).

14. Nutzergerät für ein industrielles Sensorsystem (150) nach Anspruch 7 oder 8, eingerichtet zum Abrufen gerätebezogener Informationen über einen industrielllen Sensor (100), aufweisend:
eine Kamera, eingerichtet zum Scannen (206) des optischen Codes (114);
einen Dekodierer zum Dekodieren des optischen Codes (114) und Erhalten eines Links zu einer Datenbank (132);
eine Kommunikationseinheit zum Aufbauen des (210) einer Verbindung zu der Datenbank (132) unter Verwendung des Links und zum Empfangen (212) der gerätebezogenen Informationen über den Sensor (100) von der Datenbank (132) über die Verbindung.
